# EUROPÄISCHE PATENTSCHRIFT

(11) **EP 1 974 246 B1**
(45) Veröffentlichungstag und Bekanntmachung des Hinweises auf die Patenterteilung: **03.01.2018**
(21) Anmeldenummer: 07734759.9
(22) Anmeldetag: 15.01.2007
(51) Int. Cl.: G03H 1/22, G02B 27/00

(54) **PROJEKTIONSVORRICHTUNG ZUR HOLOGRAPHISCHEN REKONSTRUKTION VON SZENEN**
PROJECTION DEVICE FOR THE HOLOGRAPHIC RECONSTRUCTION OF SCENES
DISPOSITIF DE PROJECTION POUR LA RECONSTRUCTION HOLOGRAPHIQUE DE SCÈNES

(30) Priorität: 20.01.2006 DE 102006004300
(43) Veröffentlichungstag der Anmeldung: 01.10.2008
(73) Patentinhaber: SeeReal Technologies S.A., 5366 Munsbach (LU)
(72) Erfinder: RENAUD-GOUD, Philippe, F-10000 Troyes (FR)
(74) Vertreter: Helbig, Nicole
(86) Internationale Anmeldenummer: PCT/IB2007/001476
(87) Internationale Veröffentlichungsnummer: WO 2007/099457

(56) Entgegenhaltungen:
- DE-A1- 10 311 306
- GB-A- 2 363 273
- JP-A- 9 068 674
- US-A- 5 172 251
- FUKAYA N ET AL: "EYE-POSITION TRACKING TYPE ELECTRO-HOLOGRAPHIC DISPLAY USING LIQUIDCRYSTAL DEVICES" ASIA DISPLAY, XX, XX, 1995, Seiten 963-964, XP002940561

## Beschreibung

Die Erfindung betrifft eine Projektionsvorrichtung zur holographischen Rekonstruktion von Szenen mit wenigstens einer Lichtmodulationseinrichtung und mit wenigstens einer Lichtquelle mit hinreichend kohärentem Licht zum Erzeugen einer in der Lichtmodulationseinrichtung kodierten Wellenfront einer Szene. Des Weiteren betrifft die Erfindung auch ein Verfahren zur holographischen Rekonstruktion von Szenen.

Die Holographie ermöglicht die Aufzeichnung und optische Wiedergabe von dreidimensionalen Objekten mit wellenoptischen Verfahren. Die Rekonstruktion des holographischen Bildes, oft Rekonstruktion genannt, erfolgt mittels einer Projektionseinrichtung und je nach Hologrammtyp durch Beleuchten des Trägermediums mit hinreichend kohärentem Licht. Das Hologramm kann dabei ein echtes oder computergeneriertes Hologramm (CGH) sein.

In der Regel erfolgt die Betrachtung der Rekonstruktion direkt, indem der Betrachter z. B. auf das computergenerierte Hologramm schaut, das aus regulär angeordneten Pixeln besteht, die entsprechend der Hologrammwerte kodiert sind. Die Rekonstruktion des CGH ist wegen der diskreten Aufzeichnung beugungsbedingt nur innerhalb eines Periodizitätsintervalls möglich, das durch die Auflösung des CGH-tragenden Mediums gegeben ist. In den aneinandergrenzenden Periodizitätsintervallen wird die Rekonstruktion, meist mit Störungen, wiederholt.

Als Aufzeichnungsmedien für CGHs dienen räumliche Lichtmodulatoren, wie beispielsweise LCD, LCoS, usw., welche die Phase und die Amplitude des einfallenden Lichts modulieren. Zur Rekonstruktion einer zwei- oder dreidimensionalen Szene dienen oft auch optische Elemente, welche das CGH in die gewünschte Ebene transformieren. Die Bildwiederholrate der Projektionseinrichtung zur Rekonstruktion der Szene muss ausreichend hoch sein, um eine hohe Bildqualität von bewegten zwei- oder dreidimensionalen Szenen zu erreichen.

Aus der US 5,172,251 ist beispielsweise eine Projektionseinrichtung mit einem eindimensionalen Lichtmodulator zur Darstellung einer rekonstruierten dreidimensionalen Szene bekannt. Der Lichtmodulator ist ein akusto-optischer Modulator und wird von Modulationssignalen eines Datenverarbeitungssystems gesteuert, wodurch ein eindimensionales Hologramm kodiert wird. Die Rekonstruktion wird mittels einzelner optischer Elemente verkleinert, um den Betrachterwinkel in horizontaler Richtung zu vergrößern. Ein horizontaler Scanner fügt kontinuierlich Teilhologramme der Szene aneinander und gleicht die Bewegung der Teilhologramme entlang des Modulators aus. Der horizontale Scanner ist mit der Geschwindigkeit der akustischen Welle synchronisiert, so dass die abgetasteten Bereiche des Ausgangsbildes aus dem Modulator in der rekonstruierten Szene feststehend erscheinen. Weiterhin ist ein vertikaler Scanner vorgesehen, um in vertikaler Richtung die horizontalen eindimensionalen Hologramme zu positionieren.

Nachteilig bei dieser Projektionseinrichtung ist jedoch aufgrund des Einsatzes eines akusto-optischen Modulator (AOM) die Notwendigkeit von zusätzlichen Elementen wie der horizontale Scanner zum Ausgleich der Signalbewegung. Dadurch entsteht eine sehr aufwendige Konstruktion. Ein weiterer Nachteil wäre die geringe Apertur des AOM, die eine Aneinanderreihung von Teilhologrammen erfordert.

Des Weiteren sind Lichtmodulatoren wie aus dem Patent Abstracts of Japan 09068674 A bekannt. Dieser Abstract mit der entsprechend dargestellten Zeichnung beschreibt eine Einrichtung zur Darstellung einer dreidimensionalen Szene mittels zweier räumlicher Lichtmodulatoren (SLM). Jeder Lichtmodulator mit dem entsprechenden Hologramm ist für ein Auge eines Betrachters bestimmt. Zwischen den Lichtmodulatoren und dem Betrachter sind ein Linsenelement und ein rotierendes Spiegelelement angeordnet. Die dreidimensionale Szene entsteht im Bereich bzw. auf dem rotierenden Spiegelelement. Bei Bewegung des Betrachters wird diese Bewegung mit einem Positionserfassungssystem erfasst, und das rotierende Spiegelelement wird entsprechend der neuen Augenposition des Betrachters um seine horizontale oder vertikale Achse gedreht. Gleichzeitig wird die Ansicht der dreidimensionalen Szene entsprechend der neuen Position des Betrachters auf den Hologrammen dargestellt.

Da das rotierende Spiegelelement in dieser Projektionseinrichtung als Bildschirm dient und damit gleichzeitig die Nachführung der Betrachterfenster erfolgt, ist die Darstellung der dreidimensionalen Szene durch die Ausdehnung des Elements begrenzt.

Außerdem kann durch die Bewegung des rotierenden Spiegelelements die Darstellung der rekonstruierten Szene verfälscht werden, das heißt, dass die rekonstruierte Szene aus unterschiedlichen Betrachtungsrichtungen anders erscheint. Die Betrachtung der rekonstruierten Szene ist deshalb unkomfortabel für den Betrachter. Ferner wird die rekonstruierte Szene durch die relativ geringe Größe der beiden Lichtmodulatoren begrenzt.

Der Patent Abstracts of Japan 09138631 beschreibt eine holographische Einrichtung zur Darstellung einer bewegten dreidimensionalen Szene, wobei ein Beobachtungsabstand von einem Beobachter zu der Szene klein gehalten werden soll. Die Einrichtung weist eine Lichtquelle, einen Lichtmodulator, Abbildungselemente zum Abbilden des Lichts und eine Feldlinse auf, die nahe bzw. am Ort der rekonstruierten Szene angeordnet ist. Da auch hier die Feldlinse als Bildschirm dient, wird die dreidimensionale Szene durch die Ausdehnung der Feldlinse begrenzt.

Die Aufgabe der vorliegenden Erfindung besteht nun darin, eine Vorrichtung und ein Verfahren zur holographischen Rekonstruktion von Szenen zu schaffen, womit die erwähnten Nachteile des Standes der Technik beseitigt und zwei- oder dreidimensionale Szenen mit hoher Bildqualität, auch bei Bewegung eines oder mehrerer Betrachter, dargestellt werden können, wobei ein einfacher und kostengünstiger Aufbau der Projektionsvorrichtung vorgesehen wird.

Erfindungsgemäß wird die Aufgabe durch Abbildungsmittel zum Abbilden einer Fourier-Transformierten des durch die Lichtmodulationseinrichtung modulierten Lichts der Lichtquelle auf einen Bildschirm und zum Abbilden der auf der Lichtmodulationseinrichtung kodierten Wellenfront in wenigstens ein virtuelles Betrachterfenster einer Betrachterebene gelöst, wobei zur Nachführung des Betrachterfensters entsprechend einer Änderung einer Augenposition wenigstens eines Betrachters wenigstens ein Ablenkmittel zwischen der Lichtmodulationseinrichtung und dem Bildschirm enthalten ist.

Die erfindungsgemäße Projektionsvorrichtung enthält wenigstens eine Lichtmodulationseinrichtung, welche von einer Beleuchtungseinrichtung mit einer hinreichend kohärenten Lichtquelle beleuchtet wird. Die Lichtmodulationseinrichtung ist vorteilhafter Weise ein räumlicher Lichtmodulator, insbesondere ein Phasenmodulator. Die Fourier-Transformierte des durch die Lichtmodulationseinrichtung modulierten Lichts der Lichtquelle wird dabei mittels Abbildungsmittel, insbesondere Linsen und/oder Spiegel, auf ein als Bildschirm dienendes optisches Element und die auf der Lichtmodulationseinrichtung kodierte Wellenfront in ein virtuelles Betrachterfenster einer Betrachterebene, von welcher aus ein oder mehrere Betrachter eine rekonstruierte zwei- oder dreidimensionale Szene beobachten können, abgebildet. Virtuelles Betrachterfenster bedeutet hier, dass dies in der Realität nicht vorhanden ist. Es ist nur ein gedachtes Fenster vor einem oder beiden Augen des Betrachters, in welchem die rekonstruierte Szene mit hinreichender Qualität beobachtet werden kann. Erfindungsgemäß wird dann bei Bewegung der(s) Betrachter(s) entsprechend ihrer (seiner) neuen Augenposition(en) das Betrachterfenster mit wenigstens einem Ablenkmittel nachgeführt. Das Ablenkmittel ist dabei innerhalb der Projektionsvorrichtung, nämlich zwischen der Lichtmodulationseinrichtung und dem Bildschirm, angeordnet. Derartige Ablenkmittel können mechanische, elektrische, magnetische oder auch optische Elemente, wie beispielsweise akusto-optische Elemente, sein.

Auf diese Weise wird eine holographische Projektionsvorrichtung geschaffen, mittels welcher eine zwei- oder dreidimensionale Szene mit hoher Bildqualität einfach und schnell rekonstruiert werden kann und eine Nachführung des Betrachterfensters ermöglicht wird. Dadurch, dass das Ablenkmittel zur Nachführung des Betrachterfensters innerhalb der Projektionsvorrichtung angeordnet ist, ist dieses nicht empfindlich gegenüber äußeren Einflüssen. Des Weiteren ist die eingesetzte Lichtmodulationseinrichtung vorteilhafter Weise ein ausgedehnter räumlicher Lichtmodulator und kein begrenzter Modulator, wie z.B. ein akusto-optischer Modulator, wodurch sich zusätzliche Elemente wie ein horizontaler Scanner aus der US 5,172,251 und deren Anordnung in der Projektionsvorrichtung vermeiden lassen. Dadurch ist ein einfacher und kompakter Aufbau möglich.

In einer Ausgestaltung der Erfindung kann vorgesehen sein, dass der Abbildungsmaßstab und die Größe des Bildschirms so gewählt sind, dass die periodische Fortsetzung der Beugungsordnungen der Fourier-Transformierten außerhalb des Bildschirms vorliegt. Der Vorteil besteht dann darin, dass die periodische Fortsetzung der Beugungsordnungen nach außerhalb des Bildschirms verlagert wird und so auf dem Bildschirm nur eine Periode dargestellt wird. Dies bedeutet, dass ein Betrachter die periodische Wiederholung der Rekonstruktion in den Beugungsordnungen nicht wahrnimmt. Dadurch wird die Wiedergabequalität gegenüber konventionellen Einrichtungen erhöht.

In einer Ausgestaltung der Erfindung kann ferner vorgesehen sein, dass die Lichtmodulationseinrichtung eine eindimensionale Lichtmodulationseinrichtung ist, wobei zur Erzeugung einer zweidimensionalen Wellenfront für eine rekonstruierte Szene ein Ablenkelement enthalten ist, welches eine optische Ablenkung in Richtung senkrecht zu der eindimensionalen Lichtmodulationseinrichtung realisiert.

Wenn eine eindimensionale räumliche Lichtmodulationseinrichtung vorgesehen ist, kann die erfindungsgemäße Projektionsvorrichtung ein Ablenkelement, vorteilhafter Weise einen Galvanometer-Scanner (Spiegelgalvanometer) oder einen Polygonspiegel zur schnellen Ablenkung eines Lichtstrahls, zwecks Erzeugung einer zweidimensionalen Wellenfront zur Darstellung einer rekonstruierten Szene, aufweisen. Die Wellenfronten der Spalten oder Zeilen, je nachdem ob die eindimensionale Lichtmodulationseinrichtung vertikal oder horizontal angeordnet ist, werden dabei mittels des Ablenkelements als Folge aneinander gereiht.

Um das Betrachterfenster in einem großen Bereich für den Betrachter bzw. die Betrachter verfügbar zu machen, kann ein Positionserfassungssystem zur Bestimmung von Änderungen einer Augenposition des Betrachters in der Betrachterebene beim Beobachten der rekonstruierten Szene enthalten sein.

Das Positionserfassungssystem verfolgt Änderungen der Augenposition des Betrachters wie auch mehrerer Betrachter beim Beobachten der rekonstruierten Szene und kodiert die Szene entsprechend der Augenposition der Betrachter. Dies ist insbesondere vorteilhaft, um bei Änderung der Augenposition die Lage und/oder den Inhalt der rekonstruierten Szene entsprechend zu aktualisieren. Daraufhin kann das Betrachterfenster entsprechend der neuen Position der Augen nachgeführt werden.

In einer weiteren vorteilhaften Ausgestaltung der Erfindung kann vorgesehen sein, dass wenigstens ein Strahlteilerelement zwischen dem Ablenkmittel und der Lichtmodulationseinrichtung angeordnet ist, wobei bei Verwendung einer zweidimensionalen binären Lichtmodulationseinrichtung das Strahlteilerelement für eine farbige Rekonstruktion einer Szene und ein weiteres Strahlteilerelement zur Vervielfältigung einer aus der Lichtmodulationseinrichtung austretenden Wellenfront enthalten ist.

Wenigstens ein in der Projektionsvorrichtung angeordnetes Strahlteilerelement kann bei Verwendung einer eindimensionalen oder zweidimensionalen Lichtmodulationseinrichtung für eine farbige Rekonstruktion der Szene eingesetzt werden. Bei Verwendung einer zweidimensionalen binären Lichtmodulationseinrichtung kann neben dem Strahlteilerelement für die farbige Rekonstruktion ein weiteres Strahlteilerelement vorgesehen werden, welches eine aus der Lichtmodulationseinrichtung austretende Wellenfront vervielfältigt. Dieses zusätzliche Strahlteilerelement kann beispielsweise ein Gitter oder ein diffraktives optisches Element (DOE) sein.

Die erfindungsgemäße Aufgabe wird weiterhin durch ein Verfahren zur holographischen Rekonstruktion von Szenen gelöst, wobei eine Fourier-Transformierte des durch die Lichtmodulationseinrichtung modulierten Lichts der Lichtquelle auf ein als Bildschirm dienendes optisches Element abgebildet wird, wobei wenigstens das optische Element die kodierte Wellenfront in wenigstens ein virtuelles Betrachterfenster einer Betrachterebene abbildet, und wobei wenigstens ein Ablenkmittel das Betrachterfenster nach Änderung einer Augenposition wenigstens eines Betrachters in der Betrachterebene nachführt.

Bei dem erfindungsgemäßen Verfahren wird zur holographischen Rekonstruktion von zweidimensionalen und/oder dreidimensionalen Szenen Licht einer Beleuchtungseinrichtung, welche hinreichend kohärentes Licht aussendet, auf wenigstens eine Lichtmodulationseinrichtung geleitet. Danach wird die Fourier-Transformierte des durch die Lichtmodulationseinrichtung modulierten Lichts der Beleuchtungseinrichtung auf einem optischen Element, insbesondere einem Bildschirm, vorteilhafter Weise einem Spiegel, abgebildet. Die in der Lichtmodulationseinrichtung kodierte Wellenfront wird danach mit Hilfe des Bildschirms in ein Betrachterfenster einer Betrachterebene, durch welches ein Betrachter die rekonstruierte Szene, vorteilhafter Weise dreidimensional, beobachten kann, abgebildet. Das Betrachterfenster wird dann bei Änderung einer Augenposition wenigstens eines Betrachters mit Hilfe eines zwischen der Lichtmodulationseinrichtung und dem als Bildschirm dienenden optischen Element angeordneten Ablenkmittels in der Betrachterebene nachgeführt. Das erfindungsgemäße Verfahren dient vorzugsweise zum Betreiben einer Projektionsvorrichtung nach einem der Ansprüche 1 bis 10.

Der Vorteil des erfindungsgemäßen Verfahrens besteht darin, dass die rekonstruierte zweidimensionale und/oder dreidimensionale Szene in einem großen Rekonstruktionsbereich mit einer hohen Bildqualität dargestellt werden kann. Des Weiteren ermöglicht das Verfahren eine Bewegung der Betrachter in der Betrachterebene, so dass die rekonstruierte Szene nicht nur an einem festen Ort vor dem Bildschirm beobachtet werden kann. Somit ist es mit dem erfindungsgemäßen Verfahren möglich, eine rekonstruierte ausgedehnte dreidimensionale Szene mit realer Tiefedarstellung anstelle von einer Tiefendarstellung eines bekannten autostereoskopischen Displays mit Parallaxebildern wenigstens einem Betrachter auch bei einem Positionswechsel darzustellen. Dadurch, dass die Wellenfront direkt modelliert wird, fällt die rechnerische Transformation in ein Hologramm weg. Außerdem ist zu einer Berechnung der modulierten Wellenfront nur eine Fresnel-Transformation des Objekts in das Betrachterfenster notwendig und nicht wie bei im Stand der Technik bekannten Projektionseinrichtungen eine zusätzliche Fourier-Transformation der Objektwellenfront in das Hologramm.

In einer vorteilhaften Ausgestaltung der Erfindung kann vorgesehen sein, dass die rekonstruierte Szene in der nullten Beugungsordnung rekonstruiert wird. Dies ist besonders vorteilhaft, da in der nullten Beugungsordnung die Helligkeit am größten ist.

Weitere Ausgestaltungen der Erfindung ergeben sich aus den restlichen Unteransprüchen. Im nachfolgenden wird die Erfindung anhand der in den Figuren näher beschriebenen Ausführungsbeispiele prinzipmäßig erläutert. Dabei wird das Prinzip der Erfindung anhand einer holographischen Rekonstruktion mit monochromatischem Licht beschrieben. Der Gegenstand der Erfindung ist jedoch auch für farbige holographische Rekonstruktionen anwendbar, worauf in den jeweiligen Ausführungsbeispielen noch näher eingegangen wird.

Die Figuren zeigen:
- Figur 1: eine prinzipmäßige Darstellung einer erfindungsgemäßen holographischen Projektionsvorrichtung mit einer eindimensionalen Lichtmodulationseinrichtung zur Rekonstruktion von dreidimensionalen Szenen in der Draufsicht;
- Figur 2: einen vergrößerten Ausschnitt aus der in Figur 1 dargestellten Projektionsvorrichtung;
- Figur 3: eine weitere Ausführungsform der erfindungsgemäßen Projektionsvorrichtung für wenigstens zwei Betrachter einer rekonstruierten Szene in der Draufsicht;
- Figur 4: eine prinzipmäßige Darstellung einer erfindungsgemäßen Projektionsvorrichtung mit einer zweidimensionalen binären Lichtmodulationseinrichtung in der Draufsicht;
- Figur 5: eine prinzipmäßige Darstellung einer erfindungsgemäßen Projektionsvorrichtung mit einer zweidimensionalen Lichtmodulationseinrichtung in der Draufsicht;
- Figur 6: eine vereinfachte Ausführungsform der erfindungsgemäßen Projektionsvorrichtung gemäß Figur 5 in der Draufsicht;
- Figur 7: eine weitere Möglichkeit der Ausgestaltung der Projektionsvorrichtung gemäß Figur 5 in der Draufsicht;

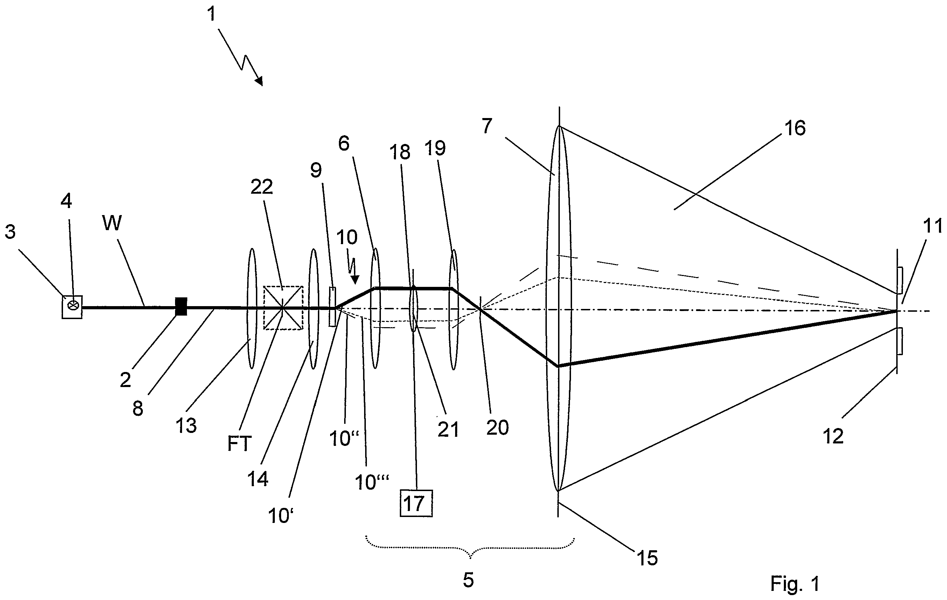

Figur 1 zeigt eine prinzipmäßig dargestellte holographische Projektionsvorrichtung 1 zur Rekonstruktion von zweidimensionalen und/oder dreidimensionalen Szenen in der Draufsicht. Zum besseren Verständnis ist die holographische Projektionsvorrichtung 1 in der Figur 1 und in den nachfolgenden Figuren vereinfacht als transmissive Vorrichtung dargestellt. Im nachfolgenden wird zunächst der Grundaufbau der holographischen Projektionsvorrichtung 1 beschrieben. Die Projektionsvorrichtung 1 weist eine Lichtmodulationseinrichtung 2, hier ein Phasenmodulator, welche eine einfallende Wellenfront moduliert, auf. Wie in diesem Ausführungsbeispiel erkennbar, ist die Lichtmodulationseinrichtung 2 eine eindimensionale Lichtmodulationseinrichtung, welche hier vertikal angeordnet ist. Sie kann selbstverständlich auch horizontal angeordnet sein. Die Lichtmodulationseinrichtung 2 wird von einer Beleuchtungseinrichtung 3 mit einer Lichtquelle 4, welche hinreichend kohärentes Licht aussendet und eine Linienlichtquelle darstellt, beleuchtet. Unter hinreichend kohärentem Licht wird hier Licht verstanden, welches interferenzfähig für die holographische Darstellung einer dreidimensionalen Szene ist. Als Lichtquelle 4 der Beleuchtungseinrichtung 3 können Laserdioden, DPSS-Laser (Diode Pumped Solid-State-Laser) oder auch andere Laser eingesetzt werden. Auch Lichtquellen mit hinreichender Kohärenz können eingesetzt werden. Jedoch sollten derartige Lichtquellen gefiltert werden, um einen erforderlichen Kohärenzgrad zu erreichen. Die holographische Projektionsvorrichtung 1 enthält weiterhin Abbildungsmittel, insbesondere ein optisches System 5. Dieses optische System 5 weist als einfachstes System ein Abbildungsmittel 6 und ein als Bildschirm dienendes optisches Element 7 auf. Das optische Element 7 wird im nachfolgenden als Bildschirm bezeichnet. Selbstverständlich kann das optische System 5 auch weitere optische Elemente aufweisen, wie beispielsweise in den nachfolgenden Ausführungen ersichtlich und beschrieben. Der Bildschirm 7 ist vorteilhaft als Spiegel, insbesondere als Konkavspiegel, ausgeführt. Selbstverständlich kann der Bildschirm 7 auch ein anderes abbildendes, optisches Element, beispielsweise eine Linse, wie hier dargestellt, sein. Ist der Bildschirm 7 ein Konkavspiegel, so besteht der Vorteil, dass die Ausdehnung des optischen Aufbaus der holographischen Projektionsvorrichtung 1 im Vergleich zu einer transmissiven Vorrichtung mit ausschließlich Linsen wesentlich reduziert wird. Der Bildschirm 7 sollte jedoch keine streuende Oberfläche aufweisen, damit eine von der Lichtmodulationseinrichtung 2 ausgehende Wellenfront 8 nicht zerstört wird. Das Abbildungsmittel 6 ist ebenfalls als Spiegel oder Linse ausgeführt. Eine von der Lichtquelle 4 ausgehende und als eben angenommene Welle W trifft auf die Lichtmodulationseinrichtung 2 und wird derart moduliert, dass dabei die Wellenfront der ebenen Welle W an äquidistanten Orten in der Lichtmodulationseinrichtung 2 zu einer gewünschten Wellenfront 8 kodiert wird. Diese Wellenfront 8 wird zur Rekonstruktion einer zwei-/dreidimensionalen Szene durch Linsenelemente 13 und 14 auf ein Ablenkelement 9 abgebildet. Ein derartiges Ablenkelement 9 kann ein Galvanometer-Scanner, ein Piezo-Scanner, ein Resonanz-Scanner, eine Mikrospiegelanordnung, ein Polygonspiegel oder eine ähnliche Einrichtung, wie beispielsweise akusto-optische, elektro-optische oder auch magnetische Einrichtung, sein. Das Ablenkelement 9 bewirkt eine optische Ablenkung der Wellenfront 8 in Richtung senkrecht zu der Lichtmodulationseinrichtung 2, um eine zweidimensionale Wellenfront 10 zu bilden bzw. zu erzeugen. Die zweidimensionale Wellenfront 10 wird durch die Ablenkung aus einer Folge von parallel zueinander angeordneten eindimensionalen Wellenfronten 10', 10" und 10"' usw. gebildet. Das optische System 5 bildet danach die zweidimensionale Wellenfront 10 in ein virtuelles Betrachterfenster 11 einer Betrachterebene 12 ab, in welchem sich ein Auge eines Betrachters zum Beobachten der rekonstruierten Szene befindet. Das hinreichend kohärente Licht der Lichtquelle 4 wird dabei gleichzeitig auf dem Bildschirm 7 abgebildet. Zwischen den Linsenelementen 13 und 14 in der bildseitigen Brennebene des Linsenelements 13 entsteht dabei eine Fourier-Transformierte FT der in der Wellenfront kodierten Information. Das Abbildungsmittel 6 des optischen Systems 5 bildet dann die Fourier-Transformierte FT auf eine Ebene 15 auf dem Bildschirm 7 ab. Die rekonstruierte Szene kann dann von dem Betrachter in einem vergrößerten Rekonstruktionsbereich 16, welcher sich kegelstumpfförmig zwischen dem Betrachterfenster 11 und dem Bildschirm 7 aufspannt, betrachtet werden. Die rekonstruierte Szene kann dabei vor, auf oder hinter dem Bildschirm 7 entstehen.

Die Rekonstruktion der dreidimensionalen Szene erfolgt dabei in der nullten Beugungsordnung. Dies ist besonders vorteilhaft, da in der nullten Beugungsordnung die Helligkeit bzw. die Intensität des Lichts am größten ist.

Es ist auch möglich, das Ablenkelement 9 direkt in die Lichtmodulationseinrichtung 2 zu integrieren. Dies bedeutet, dass die Lichtmodulationseinrichtung 2 zur Erzeugung der zweidimensionalen Wellenfront 10 als ganzes System bewegt wird. Die Linsenelemente 13 und 14 können in diesem Fall entfallen. Die Lichtmodulationseinrichtung 2 ist dann im Bereich des Ablenkelements 9, also in der objektseitigen Brennebene des Abbildungsmittels 6 angeordnet. Ein Strahlteilerelement 22 zur farbigen Rekonstruktion der Szene kann demzufolge beispielsweise zwischen der Lichtmodulationseinrichtung 2 und dem Abbildungsmittel 6 positioniert werden. Auf diese Weise kann die holographische Projektionsvorrichtung 1 im Gesamtaufbau kompakter gestaltet werden.

Zusätzlich können aber dennoch im Strahlengang der holographischen Projektionsvorrichtung 1 die Linsenelemente 13 und 14 angeordnet sein. Die Linsenelemente 13 und 14 weisen, wie hier an den einzelnen Brennweiten erkennbar, zur Reduzierung von Abbildungsfehlern gleiche Brechkraft auf. Jedoch können die Linsenelemente 13 und 14 auch unterschiedliche Brechkraft bzw. Brennweiten aufweisen, um die Größe der eindimensionalen Wellenfront 8 auf dem Ablenkelement 9 zu verändern bzw. zu optimieren. Die Linsenelemente 13 und 14 weisen einen weiteren Vorteil in diesem Fall auf. Sie sorgen dann dafür, dass die von der Lichtmodulationseinrichtung 2 ausgehende Wellenfront 8 auf das Ablenkelement 9 zur Erzeugung der zweidimensionalen Wellenfront 10 abgebildet wird. Zur Abbildung der Wellenfront 8 auf das Ablenkelement 9 kann ein afokales System, durch die Linsenelemente 13 und 14 dargestellt, eingesetzt werden. In der bildseitigen Brennebene des Linsenelementes 13 entsteht dabei die Fourier-Transformierte FT der Wellenfront 8. Mittels des Linsenelementes 14 und des Abbildungsmittels 6 wird die Fourier-Transformierte FT auf dem Bildschirm 7 abgebildet.

Das Ablenkelement 9 kann aber auch zwischen der Lichtquelle 4 und der Lichtmodulationseinrichtung 2 angeordnet sein. Dies hat den Vorteil, dass dadurch Fehler bei der Kodierung der zweidimensionalen Wellenfront 10 weitestgehend verhindert bzw. reduziert werden, da die auf die Lichtmodulationseinrichtung 2 auftreffende ebene Wellenfront W noch nicht kodiert ist.

Die hier dargestellte Projektionsvorrichtung 1 weist außerdem ein Positionserfassungssystem 17 zur Bestimmung einer Augenposition eines Betrachters in der Betrachterebene 12 auf. Das Positionserfassungssystem 17 kann beispielsweise eine Kamera sein. Zur Nachführung des Betrachterfensters 11 bei der Änderung der Augenposition des Betrachters ist ein Ablenkmittel 18 zwischen dem Abbildungsmittel 6 und dem Bildschirm 7, insbesondere in der bildseitigen Brennebene des Abbildungsmittels 6, angeordnet. Das Ablenkmittel 18 ist individuell ansteuerbar und vorteilhaft als Spiegel ausgeführt. Zum Nachführen des Betrachterfensters 11 wird ein sehr präzise arbeitendes Ablenkmittel benötigt. Aus diesem Grunde kann das Ablenkmittel 18 beispielsweise ein Galvanometer-Scanner sein. Selbstverständlich ist es auch möglich, andere Ablenkmittel, wie z.B. MEMS-Anordnungen, Polygonscanner oder eine akusto-optische Anordnung, zu verwenden. Ebenso kann das Ablenkmittel 18 in wenigstens einer der Richtungen horizontal oder vertikal ablenken. Das heißt, dass das Ablenkmittel 18 bei eindimensionaler Ausführung entweder nur horizontal oder nur vertikal das Betrachterfenster 11 nachführt. Bei einer zweidimensionalen Ausführung des Ablenkmittels 18 kann das Betrachterfenster 11 in beiden Richtungen, horizontal und vertikal, nachgeführt werden. Dazu kann das Ablenkmittel 18 als xy-Galvanometer-Scanner ausgeführt sein, oder es ist auch möglich, zwei hintereinander angeordnete Galvanometer-Scanner, einen für eine horizontale und einen für eine vertikale Nachführung, einzusetzen. Das Ablenkelement 9 muss zur Nachführung des Betrachterfensters 11 mit dem Ablenkmittel 18 synchronisiert sein. Es ist weiterhin ein dem Ablenkmittel 18 in Lichtrichtung nachgeschaltetes zweites Abbildungsmittel 19 vorgesehen. Da die Vergrößerung zur Abbildung der Fourier-Transformierten FT auf dem Bildschirm 7 sehr groß sein muss, kann das zweite Abbildungsmittel 19 anstatt als Linse auch als ein Linsensystem zur Reduzierung von Abbildungsfehlern ausgeführt sein. Ist kein zweites Abbildungsmittel 19 vorgesehen, dann muss das Abbildungsmittel 6 als Linse oder Linsensystem ausgebildet sein.

Im nachfolgenden wird die Rekonstruktion der dreidimensionalen Szene anhand dieses Ausführungsbeispiels detaillierter beschrieben. Die von der Lichtquelle 4 ausgesandte Wellenfront W trifft zur Modulation auf die Lichtmodulationseinrichtung 2, wodurch die Wellenfront W moduliert wird. Danach tritt die modulierte Wellenfront 8 durch die Linsenelemente 13 und 14 und wird von diesen auf das Ablenkelement 9 abgebildet. Gleichzeitig entsteht mittels des Linsenelements 13 die Fourier-Transformierte FT der Wellenfront 8 in der bildseitigen Brennebene des Linsenelements 13. Nach der Bildung der zweidimensionalen Wellenfront 10 trifft diese nach Durchtritt durch das Abbildungsmittel 6 auf das Ablenkmittel 18. Bei Bewegung des Betrachters in der Betrachterebene 12 kann über das Positionserfassungssystem 17 diese Bewegung detektiert werden. Zur Nachführung des Betrachterfensters 11 kann dann mit dem Positionserfassungssystem 17 das Ablenkmittel 18 gesteuert werden. Mittels der Abbildungsmittel 6 und 19 entsteht dabei in einer Brennebene 20 des zweiten Abbildungsmittels 19 ein Bild der zweidimensionalen Wellenfront 10. Dieses zweidimensionale Bild in der Brennebene 20 wird dann über den Bildschirm 7 in das Betrachterfenster 11 abgebildet. Gleichzeitig entsteht in einer bildseitigen Brennebene 21 des Abbildungsmittels 6 die Abbildung der Fourier-Transformierten FT. Das zweite Abbildungsmittel 19 bildet dann die Abbildung der Fourier-Transformierten FT auf den Bildschirm 7 ab.

Die oben beschriebene holographische Projektionsvorrichtung 1 wurde nur für ein Auge eines Betrachters dargestellt und beschrieben. Für ein Augenpaar des Betrachters ist es sinnvoll, eine zweite Lichtmodulationseinrichtung 2 vorzusehen. Die optischen Elemente der bestehenden holographischen Projektionsvorrichtung 1 können weiter benutzt werden. Befindet sich der Betrachter nun in der Betrachterebene 12 und blickt durch das Betrachterfenster 11, so kann er die rekonstruierte dreidimensionale Szene im Rekonstruktionsbereich 16 beobachten, wobei die rekonstruierte dreidimensionale Szene in Lichtrichtung vor, auf oder hinter dem Bildschirm 7 entsteht. Es ist aber auch möglich, nur mit einer einzigen Lichtmodulationseinrichtung einem Augenpaar des Betrachters die rekonstruierte Szene darzustellen, wobei die Lichtmodulationseinrichtung 2 horizontal angeordnet ist.

Eine farbige Rekonstruktion der dreidimensionalen Szene ist mit der holographischen Projektionsvorrichtung 1 ebenfalls möglich. Dafür ist in Figur 1 ein Strahlteilerelement 22, insbesondere ein Prismenblock, in Strahlrichtung vor dem Abbildungsmittel 6 vorgesehen. Das Strahlteilerelement 22, welches hier vorteilhaft als X-Prisma mit dichroitischen Schichten ausgeführt ist, splittet rotes, grünes und blaues Licht in drei separate Wellenfronten auf bzw. fügt diese zu einer gemeinsamen modulierten Wellenfront zusammen. Es ist selbstverständlich auch möglich, ein anderes Strahlteilerelement zur farbigen Rekonstruktion einzusetzen. Die farbige Rekonstruktion der Szene erfolgt dabei simultan in den drei Grundfarben RGB (rotgrün-blau). Das Strahlteilerelement 22 ist in diesem Ausführungsbeispiel zwischen den Linsenelementen 13 und 14 angeordnet, wobei es selbstverständlich auch an anderer Position in der holographischen Projektionsvorrichtung 1 angeordnet sein kann.

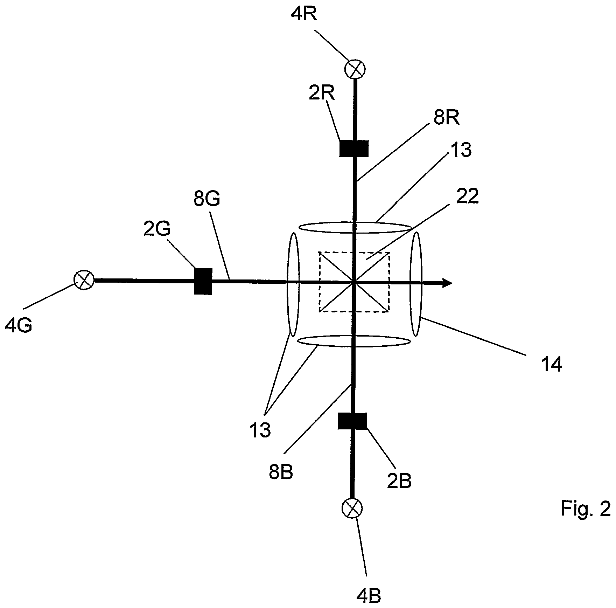

In Figur 2 ist ein vergrößerter Ausschnitt des Strahlteilerelementes 22 von Figur 1 dargestellt. Dabei werden zur simultanen farbigen Rekonstruktion der dreidimensionalen Szene drei Lichtmodulationseinrichtungen 2R, 2G und 2B für jede der drei Grundfarben RGB vorgesehen. Die drei Lichtmodulationseinrichtungen 2R, 2G und 2B werden von drei Lichtquellen 4R, 4G und 4B beleuchtet. Das Strahlteilerelement 22 führt nach der Modulation von einzelnen zugehörigen Wellenfronten 8R, 8G und 8B an den Lichtmodulationseinrichtungen 2R, 2G und 2B diese zur Weiterführung auf das Linsenelement 14 zusammen. Es ist ebenfalls möglich, dass nur eine Lichtquelle, insbesondere eine Weißlichtquelle, zur farbigen Rekonstruktion eingesetzt wird. Dabei wird auch hier das Strahlteilerelement 22 zwischen den Linsenelementen 13 und 14 angeordnet. Zwischen dem Strahlteilerelement 22 und dem Linsenelement 14 ist jedoch ein halbdurchlässiger Spiegel angeordnet. Zur Beleuchtung der drei Lichtmodulationseinrichtungen 2R, 2G, 2B und Modulation der Wellenfronten wird das Licht der Lichtquelle auf den halbdurchlässigen Spiegel gelenkt und von dort mittels des Strahlteilerelements 22 auf die drei Lichtmodulationseinrichtungen 2R, 2G, 2B geleitet, wobei das Strahlteilerelement 22 das Licht in die drei monochromatischen Wellenfronten 8R, 8G, 8B aufsplittet. Ferner ist es auch möglich, zur farbigen Rekonstruktion nicht drei, sondern nur eine einzige Lichtmodulationseinrichtung vorzusehen, wobei diese Möglichkeit nicht dargestellt ist. Diese Lichtmodulationseinrichtung kann mit einer Lichtquelle, welche drei verschiedenfarbige Leuchtdioden (LED) oder eine Weißlicht-LED aufweist, beleuchtet werden. Zusätzlich wird jedoch noch wenigstens ein optisches Element, beispielsweise ein akusto-optisches Element benötigt, welches zum Beispiel die Wellenfronten in einem unterschiedlichen Einfallswinkel auf die Lichtmodulationseinrichtung sendet.

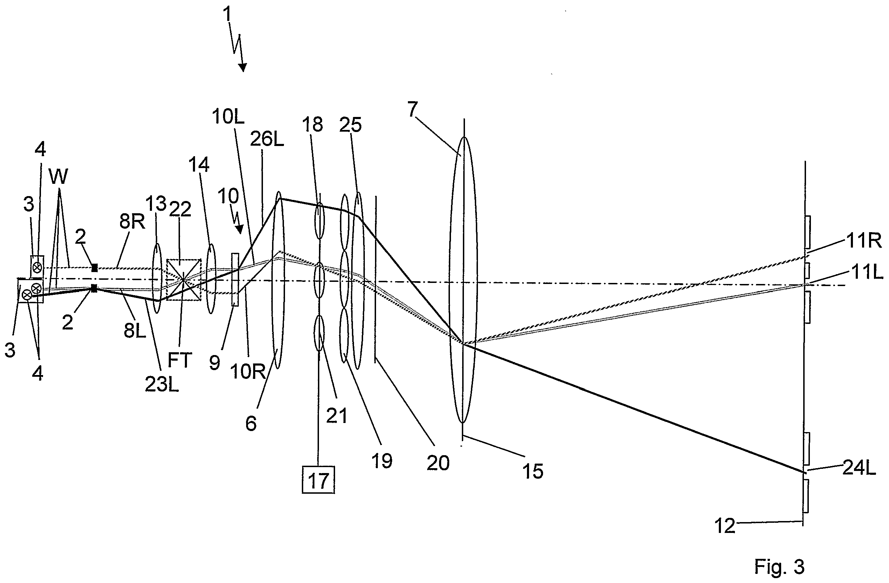

In Figur 3 ist ein weiteres Ausführungsbeispiel der holographischen Projektionsvorrichtung 1 dargestellt, wobei hier der Aufbau grundsätzlich dem Aufbau der Projektionsvorrichtung 1 gemäß Figur 1 entspricht. Deshalb weisen auch hier gleiche Teile gleiche Bezugszeichen auf. Die hier gezeigte holographische Projektionsvorrichtung 1 ist im Gegensatz zu der Figur 1 für mehrere Betrachter vorgesehen. Dazu sind in diesem Ausführungsbeispiel zur Vereinfachung der Darstellung nur die Strahlengänge für zwei Betrachter und jeweils nur eine eindimensionale Wellenfront pro Betrachter dargestellt. Grundsätzlich können aber auch mehr als zwei Betrachter die rekonstruierte dreidimensionale Szene beobachten. Das Betrachterfenster mit dem Buchstaben R steht für das rechte Auge und die Betrachterfenster mit den Buchstaben L für jeweils das linke Auge eines Betrachters. Zur Darstellung der rekonstruierten dreidimensionalen Szene sind hier zwei Lichtmodulationseinrichtungen 2 in der holographischen Projektionsvorrichtung 1 enthalten. Diese zwei Lichtmodulationseinrichtungen 2 werden von jeweils einer Beleuchtungseinrichtung 3 mit wenigstens einer Lichtquelle 4 beleuchtet. Die Lichtquellen 4 sind dabei unabhängig voneinander und weisen unterschiedliche Lichteinfallswinkel auf. Die Anzahl der Lichtquellen 4 pro Lichtmodulationseinrichtung 2 ist dabei abhängig von der Anzahl der Betrachter der rekonstruierten Szene und wird durch diese bestimmt. Für zwei oder mehrere Betrachter wird eine einzige Lichtmodulationseinrichtung 2 für jeweils das gleiche Betrachterfenster, das heißt jeweils für die rechten Augen oder jeweils für die linken Augen der Betrachter, genutzt. Die Lichtquellen 4 beleuchten mit hinreichend kohärentem Licht in unterschiedlichen Einfallswinkeln die Lichtmodulationseinrichtung 2. Die Einfallswinkel des Lichts der Lichtquellen 4 für die Betrachterfenster 11R und 11L des Augenpaares eines Betrachters sind dabei nahezu gleich. Das heißt, dass der Einfallswinkel der Lichtquellen 4 zur Erzeugung von modulierten Wellenfronten 8L und 23L für die Betrachterfenster 11L und 24L verschieden sind. Der Bildschirm 7, das Ablenkelement 9, die Linsenelemente 13 und 14 sowie die Abbildungsmittel 6 und 19 können für beide Lichtmodulationseinrichtungen 2 verwendet werden.

Im Unterschied zu Figur 1 sind zur Nachführung von wenigstens zwei, hier drei, Betrachterfenstern 11R, 11L und 24L entsprechend der jeweiligen Augenposition der Betrachter zwei Ablenkmittel 18 vorgesehen. Die Anzahl der Ablenkmittel 18 ist dabei von der Anzahl der Betrachter abhängig. Dies bedeutet, dass pro Betrachter nur ein Ablenkmittel 18 für beide Augen, hier Betrachterfenster 11R und 11L, verwendet wird. In Strahlrichtung hinter den Ablenkmitteln 18 ist das zweite Abbildungsmittel 19 in Verbindung mit einem Fokussierelement 25 angeordnet. Das zweite Abbildungsmittel 19 ist hier als zur Kollimation der Wellenfronten 10R und 10L dienendes Lentikular ausgeführt, wobei beide Wellenfronten 10R und 10L für das linke und rechte Auge durch ein dem Ablenkmittel 18 zugeordnetes Lentikel des zweiten Abbildungsmittels 19 geführt werden. Das Fokussierelement 25 dient nach Durchtritt der beiden Wellenfronten 10R und 10L durch das entsprechende Lentikel des zweiten Abbildungsmittels 19 zur Überlappung und Fokussierung der Fourier-Transformierten FT auf dem Bildschirm 7. Ein weiteres Ablenkmittel 18 ist zur Nachführung des Betrachterfensters 24L für eine zweidimensionale Wellenfront 26L vorgesehen. Zur Reduzierung von Abbildungsfehlern kann das Fokussierelement 25 durch eine komplexere Anordnung von Linsen ersetzt werden. Beispielsweise kann das Fokussierelement 25 als Achromat ausgebildet sein. Es besteht auch die Möglichkeit, das zweite Abbildungsmittel 19 und das Fokussierelement 25 beispielsweise als einzelnes Lentikular in der Projektionsvorrichtung 1 vorzusehen.

Die rekonstruierte dreidimensionale Szene entsteht hier wie bereits unter Figur 1 beschrieben, außer dass in diesem Ausführungsbeispiel die holographische Projektionsvorrichtung 1 für mehrere Betrachter vorgesehen ist und deshalb die Nachführung der Betrachterfenster 11R, 11L und 24L über mehrere Ablenkmittel 18 geschieht. Mit der hier dargestellten holographischen Projektionsvorrichtung 1 wird ermöglicht, drei Betrachterfenster gleichzeitig zu bedienen.

Anstatt Lichtquellen 4 zu nutzen, welche hinreichend kohärentes Licht aussenden, das unter verschiedenen Einfallswinkeln jeweils auf die Lichtmodulationseinrichtungen 2 trifft, ist es auch möglich, eine einzige Lichtquelle 4 für jede Lichtmodulationseinrichtung 2 vorzusehen. Die Vervielfältigung der Wellenfronten geschieht dann nach der Modulation in der Lichtmodulationseinrichtung 2. Dies kann beispielsweise im Bereich des Ablenkelements 9 mit Hilfe eines Gitterelementes vorgenommen werden. Der Vorteil dieser Lösung besteht darin, dass Phasendefekte von Wellenfronten der einzelnen Lichtquellen 4 auf die Lichtmodulationseinrichtungen 2 korrigiert werden können.

Bezüglich der Figuren 1 und 3 kann das Ablenkmittel 18, welches als Spiegel bzw. Spiegelanordnung, insbesondere als Galvanometer-Scanner ausgebildet ist, mit einer lichtstreuenden Schicht versehen sein. Das Ablenkmittel 18 kann somit als Spiegel ausgeführt sein, der in horizontaler Richtung streut. Die lichtstreuende Schicht kann dabei z.B. als Folie ausgeführt sein. Die Ausbreitung des gestreuten Lichts muss senkrecht zu der eindimensionalen Wellenfront erfolgen. Da die Kohärenz bei einer holographischen Rekonstruktion wesentlich ist, darf diese nicht durch Einbringung einer lichtstreuenden Schicht gestört werden. Dadurch ist es jedoch möglich, eine Ausdehnung bzw. Vergrößerung der Betrachterfenster 11, 11R, 11L, 24L in nicht-kohärenter Richtung zu erreichen, wobei die Betrachterfenster 11, 11R, 11L, 24L in der anderen Richtung durch die Ausdehnung der Beugungsordnungen begrenzt sind. Besonders vorteilhaft ist es, wenn die Lichtmodulationseinrichtung 2 horizontal angeordnet ist. Auf diese Weise kann in vertikaler, nicht-kohärenter Richtung eine Aufweitung der einzelnen Betrachterfenster 11, 11R, 11L, 24L ermöglicht werden. Deshalb ist es bei dieser Anordnung der Lichtmodulationseinrichtung 2 nicht mehr notwendig, die Betrachterfenster 11, 11R, 11L, 24L entsprechend der vertikalen Position des Betrachters vertikal nachzuführen, da die Betrachterfenster 11, 11R, 11L, 24L in dieser Richtung eine große Ausdehnung aufweisen. Es besteht auch die Möglichkeit die lichtstreuende Schicht auf dem Bildschirm 7 aufzubringen, welcher dann nicht nur zur Abbildung und Darstellung dient, sondern auch die Fourier-Transformierte der Wellenfront in nicht-kohärenter Richtung streut.

Es gibt verschiedene Möglichkeiten für das zeitliche Multiplexing der Zeilen bzw. Spalten der modulierten Wellenfront 8 bei der Realisierung von zweidimensionalen Wellenfronten eines Teilbildes der rekonstruierten dreidimensionalen Szene für jeweils zwei oder mehrere Betrachter durch das Ablenkelement 9 im Zusammenspiel mit der eindimensionalen Lichtmodulationseinrichtung 2 und/oder dem Ablenkmittel 18. Es wird die zweidimensionale Wellenfront eines Teilbildes erst für einen Betrachter und dann für einen anderen Betrachter vollständig aufgebaut. Weiterhin ist es möglich, dass die den einzelnen Betrachtern zugehörigen Zeilen bzw. Spalten der modulierten Wellenfront eines Teilbildes abwechselnd nacheinander dargestellt werden.

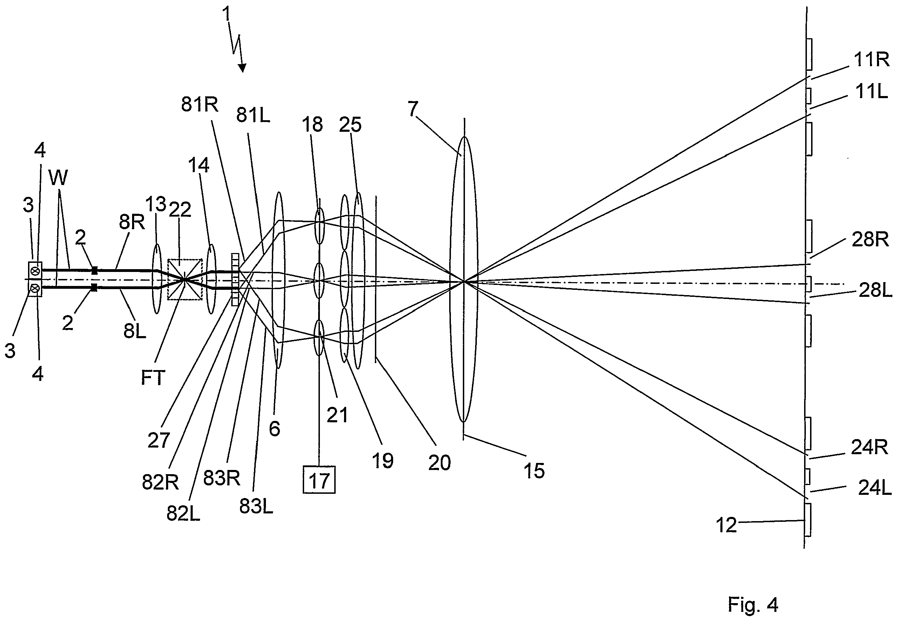

Die Ausführungsbeispiele der Erfindung gemäß den Figuren 1, 2 und 3 beziehen sich immer auf wenigstens eine eindimensionale Lichtmodulationseinrichtung 2 zur Modulation wenigstens einer einfallenden Wellenfront. Die Erfindung kann aber auch mit zweidimensional ausgeführten Lichtmodulationseinrichtungen realisiert werden. Diese Ausführungsformen der Projektionsvorrichtung 1 werden nachfolgend in den Figuren 4, 5, 6 und 7 beschrieben.

In Figur 4 ist ein weiteres Ausführungsbeispiel der holographischen Projektionsvorrichtung 1 in der Draufsicht dargestellt. Auch in diesem Ausführungsbeispiel ist die Projektionsvorrichtung 1 für mehrere Betrachter in der Betrachterebene12 vorgesehen. In Unterschied zu den Figuren 1 und 3 ist hier die Lichtmodulationseinrichtung 2 als zweidimensionale binäre Lichtmodulationseinrichtung 2 ausgeführt. Bei derartigen Lichtmodulationseinrichtungen 2 ist die modulierte Wellenfront binär kodiert. Da die Wiedergabe der Wellenfront sehr ungenau ist, werden mehrere unterschiedliche Wellenfronten für eine rekonstruierte Szene überlagert. Ein Ablenkelement, welches zur Erzeugung einer zweidimensionalen Wellenfront dient, ist hier nicht mehr notwendig.

Anstatt des Ablenkelementes 9 der Figuren 1 und 3 ist ein Strahlteilerelement 27, welches neben dem Strahlteilerelement 22, das zur Aufteilung des Lichts in seine Spektralkomponenten oder zur Zusammenführung vorgesehen ist, zur Vervielfältigung jeweils einer aus den Lichtmodulationseinrichtungen 2 austretenden Wellenfront 8R und 8L in der Projektionsvorrichtung 1 enthalten. Dieses Strahlteilerelement 27 ist vorteilhafter Weise in der bildseitigen Brennebene des Linsenelements 14 und dem Abbildungsmittel 6 angeordnet und kann beispielsweise als Gitter oder diffraktives optisches Element (DOE), insbesondere als konfigurierbares DOE, ausgeführt sein. Es ist auch möglich anstelle des Strahlteilerelements 27 für jede Lichtmodulationseinrichtung 2 mehrere Lichtquellen 4 in Abhängigkeit von der Anzahl der Betrachter in der Betrachterebene 12 vorzusehen. Das Licht der Lichtquellen 4 sollte dann jeweils unter verschiedenen Einfallswinkeln auf die Lichtmodulationseinrichtung 2 treffen.

Zur Rekonstruktion der Szene für drei dargestellte Betrachter sind zwei Lichtmodulationseinrichtungen 2 in der Projektionsvorrichtung 1 enthalten, wobei eine Lichtmodulationseinrichtung 2 für jeweils das rechte Auge der Betrachter und die andere Lichtmodulationseinrichtung 2 für jeweils das linke Auge der Betrachter vorgesehen sind. Die beiden Lichtmodulationseinrichtungen 2 werden jeweils von einer Beleuchtungseinrichtung 3 mit einer Lichtquelle 4 beleuchtet. Deren Licht wird dabei derart moduliert, dass die ebenen Wellen W an äquidistanten Orten in der Lichtmodulationseinrichtung 2 zu jeweils einer gewünschten Wellenfront 8R und 8L kodiert werden. Diese Wellenfronten 8R und 8L werden dann über die Linsenelemente 13 und 14 auf das Strahlteilerelement 27 zur Vervielfältigung in mehrere Wellenfronten 81R, 82R, 83R und 81L, 82L, 83L abgebildet. Gleichzeitig entstehen zwischen den Linsenelementen 13 und 14, vorteilhaft in der Brennebene des Linsenelementes 13, die Fourier-Transformierten FT der Wellenfronten 8R und 8L. Die Fourier-Transformierten FT werden danach über das Linsenelement 14 und das Abbildungsmittel 6 in die Brennebene 21 des Abbildungsmittels 6 im Bereich von drei Ablenkmitteln 18 abgebildet. Die Wellenfronten 81R, 82R, 83R und 81L, 82L, 83L werden dabei mittels der Abbildungsmittel 6 und 19 und dem Fokussierelement 25 in die gemeinsame Brennebene 20 des zweiten Abbildungsmittels 19 und des Fokussierelements 25 abgebildet, wobei diese danach über den Bildschirm 7 in die Betrachterfenster 11R, 11L, 24R, 24L, 28R und 28L auf die Augen der drei Betrachter abgebildet werden. Gleichzeitig werden die Bilder der Fourier-Transformierten FT von der Brennebene 21 über das zweite Abbildungsmittel 19 und das Fokussierelement 25 auf dem Bildschirm 7 abgebildet. Die Anzahl der Ablenkmittel 18 ist auch hier von der Anzahl der Betrachter abhängig. Dies bedeutet, dass pro Betrachter nur ein Ablenkmittel 18 für beide Augen, hier Betrachterfenster 11R und 11L, verwendet wird. Auch hier wird in der nullten Beugungsordnung die dreidimensionale Szene rekonstruiert. Bei Bewegung der Betrachter in der Betrachterebene 12 detektiert auch hier das Positionserfassungssystem 17 die Änderung der Positionen der Augen und steuert die Ablenkmittel 18 derart, dass die Betrachterfenster 11R, 11L, 24R, 24L, 28R und 28L in Richtung der neuen Position der Augen der Betrachter nachgeführt werden. Eine farbige Rekonstruktion der dreidimensionalen Szene kann entsprechend dem oben beschriebenen Beispiel mittels des Strahlteilerelementes 22 erfolgen.

Anstatt zwei Lichtmodulationseinrichtungen 2 zu verwenden, kann auch nur eine einzige Lichtmodulationseinrichtung 2 zur Rekonstruktion der Szene für einen oder mehrere Betrachter vorgesehen sein. Dementsprechend ist dann auch nur eine einzige Lichtquelle zur Beleuchtung der Lichtmodulationseinrichtung 2 notwendig.

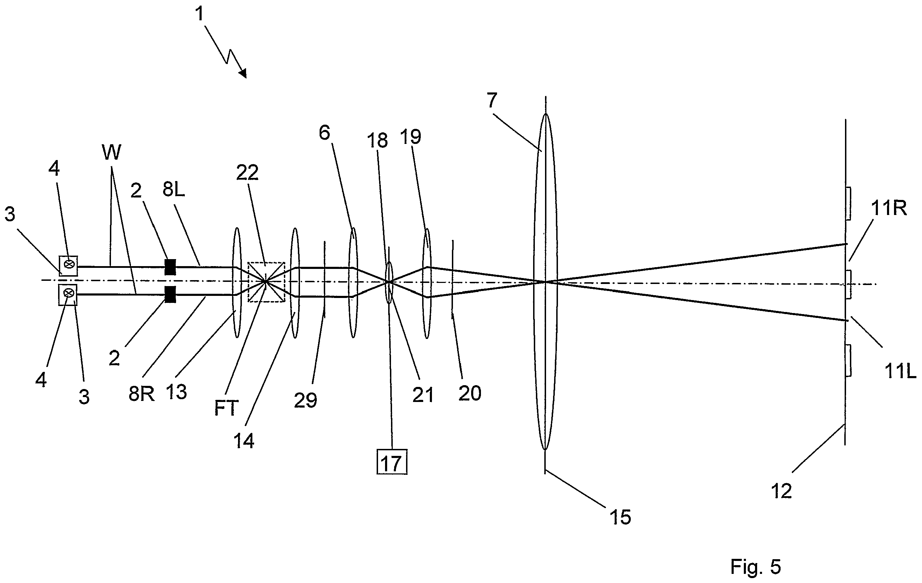

In Figur 5 ist ein weiteres Ausführungsbeispiel der Projektionsvorrichtung 1 in der Draufsicht dargestellt, wobei nur ein Betrachter dargestellt ist. Grundsätzlich können auch mehrere Betrachter die rekonstruierte Szene beobachten. Die hier verwendeten Lichtmodulationseinrichtungen 2 sind ebenfalls zweidimensionale Lichtmodulationseinrichtungen, welche aber im Gegensatz zu binären Lichtmodulationseinrichtungen eine mehrwertige Kodierung erlauben und somit direkt mit nur einem Bild eine bessere Wiedergabe der Wellenfronten durch die Wiedergabe von z.B. mehreren Phasenwerten erzielen. Auf diese Weise kann somit die Projektionsvorrichtung 1 im Gegensatz zu den Figuren 1, 3 und 4 in vereinfachter Form aufgebaut werden. Ein Ablenkelement 9 sowie ein Strahlteilerelement 27 sind nicht mehr notwendig. Ebenso kann jetzt zur Nachführung der Betrachterfenster 11R und 11L oder auch mehrerer Betrachterfenster nur ein einziges Ablenkmittel 18 dienen.

Zur Rekonstruktion der vorteilhaft dreidimensionalen Szene sind für das rechte Auge und für das linke Auge je eine Lichtmodulationseinrichtung 2 vorgesehen. Diese beiden Lichtmodulationseinrichtungen 2 werden von den zwei Lichtquellen 4 der Beleuchtungseinrichtungen 3 mit hinreichend kohärentem Licht beleuchtet. Auf die Lichtmodulationseinrichtungen 2 treffen die ebenen Wellen W, welche zu den gewünschten Wellenfronten 8R und 8L kodiert werden. Die Wellenfronten 8R und 8L werden dann über die Linsenelemente 13 und 14 auf eine bildseitige Brennebene 29, welche zwischen dem Linsenelement 14 und dem Abbildungsmittel 6 entsteht, abgebildet. Gleichzeitig entstehen zwischen den Linsenelementen 13 und 14 in der bildseitigen Brennebene des Linsenelementes 13 die Fourier-Transformierten FT der Wellenfronten 8R und 8L. Die Fourier-Transformierten FT werden danach über das Linsenelement 14 und das Abbildungsmittel 6 in die Brennebene 21 abgebildet. Die Wellenfronten 8R und 8L werden danach mittels der Abbildungsmittel 6 und 19 in die Brennebene 20 abgebildet, wobei diese danach über den Bildschirm 7 in die Betrachterfenster 11R und 11L auf die Augen des Betrachters abgebildet werden. Gleichzeitig werden die Bilder der Fourier-Transformierten FT von der Brennebene 21 über das zweite Abbildungsmittel 19 auf dem Bildschirm 7 abgebildet. Die Wellenfronten 8R und 8L für das rechte und das linke Betrachterfenster 11R und 11L werden hier gleichzeitig abgebildet. Auch hier wird in der nullten Beugungsordnung die dreidimensionale Szene rekonstruiert. Bei Bewegung des Betrachters in der Betrachterebene 12 detektiert das Positionserfassungssystem 17 die Änderung der Positionen der Augen und steuert das Ablenkmittel 18 derart, dass die Betrachterfenster 11R und 11L in Richtung der neuen Position der Augen des Betrachters nachgeführt werden. Eine farbige Rekonstruktion der dreidimensionalen Szene kann auch hier entsprechend dem oben beschriebenen Beispiel mittels des Strahlteilerelementes 22 erfolgen.

Befinden sich mehrere Betrachter in der Betrachterebene 12, so werden die rechte und die linke Wellenfront für die Betrachterfenster 11R und 11L gleichzeitig erst einem Betrachter und dann dem nächsten Betrachter dargestellt. Danach wird die nächste Wellenfront wieder erst dem einen Betrachter und dann dem nächsten Betrachter usw. dargestellt. Weiterhin ist es auch möglich die entsprechende Wellenfront für das Betrachterfenster 11R des rechten Auges nacheinander allen Betrachtern und danach die entsprechende Wellenfront für das Betrachterfenster 11L des linken Auges nacheinander allen Betrachtern darzustellen. Zur Darstellung der nächsten rekonstruierten Szene wird entsprechend vorgegangen.

In diesem Ausführungsbeispiel ist es somit auch möglich, eine einzige Lichtmodulationseinrichtung 2 für beide Augen des Betrachters vorzusehen. Ist dies der Fall werden die beiden Betrachterfenster 11R und 11L, wie oben erwähnt, abwechselnd bedient. Für mehrere Betrachter werden erst alle rechten Betrachterfenster 11R,... und danach alle linken Betrachterfenster 11L,... oder umgekehrt bedient.

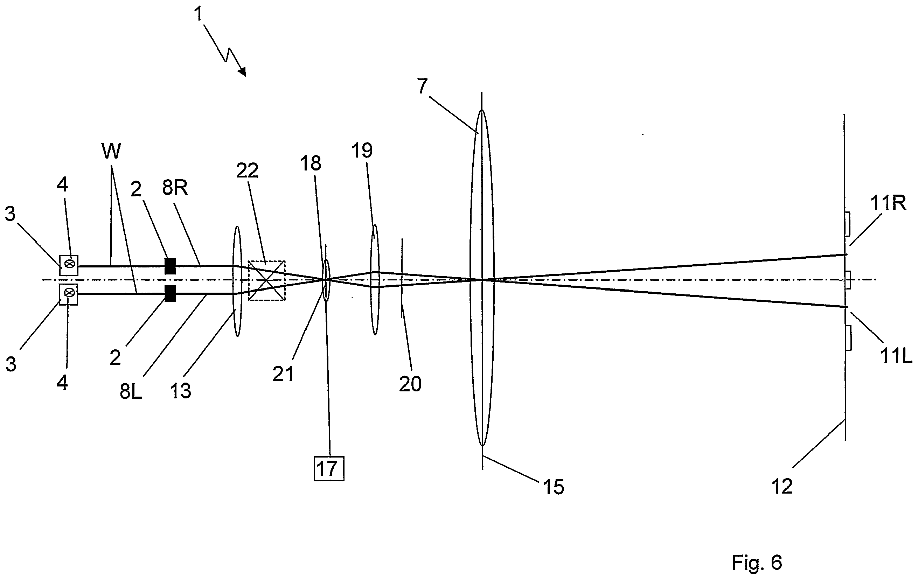

Die Figur 6 zeigt eine Vereinfachung der Projektionsvorrichtung 1 gemäß Figur 5, wobei auch hier nur ein Betrachter dargestellt ist. Grundsätzlich können auch mehrere Betrachter vorhanden sein. Die hier verwendeten Lichtmodulationseinrichtungen 2 sind ebenso zweidimensionale Lichtmodulationseinrichtungen, wie bereits unter Figur 5 erwähnt. Auch in diesem Ausführungsbeispiel ist zur Nachführung der Betrachterfenster 11R und 11L oder auch mehrerer Betrachterfenster nur ein einziges Ablenkmittel 18 vorgesehen. Wenn gemäß Figur 5 das Linsenelement 14 und das Abbildungsmittel 6 zusammen ein afokales System bilden, dann können diese optischen Elemente, wie in Figur 6 dargestellt, entfallen. Dadurch kann eine sehr vereinfachte Projektionsvorrichtung 1 geschaffen werden, wobei jedoch eine Korrektion von Abbildungsfehlern, z.B. der chromatischen Aberration, erschwert wird.

Zur Rekonstruktion der dreidimensionalen Szene sind auch hier für das rechte Auge und für das linke Auge je eine Lichtmodulationseinrichtung 2 vorgesehen. Diese beiden Lichtmodulationseinrichtungen 2 werden von den zwei Lichtquellen 4 der Beleuchtungseinrichtungen 3 mit hinreichend kohärentem Licht beleuchtet. Auf die Lichtmodulationseinrichtungen 2 treffen die Wellen W, welche zu den gewünschten Wellenfronten 8R und 8L kodiert werden. Die Wellenfronten 8R und 8L werden dann über das Linsenelement 13 und das zweite Abbildungsmittel 19 in die Brennebene 20 abgebildet, wobei diese danach über den Bildschirm 7 in die Betrachterfenster 11R und 11L auf die Augen des Betrachters abgebildet werden. Gleichzeitig entstehen zwischen dem Linsenelement 13 und dem zweiten Abbildungsmittel 19, nämlich im Bereich des Ablenkmittels 18, in der Brennebene 21 des Linsenelementes 13 die Fourier-Transformierten FT der Wellenfronten 8R und 8L. Die Fourier-Transformierten FT werden danach über das zweite Abbildungsmittel 19 auf dem Bildschirm 7 abgebildet. Die Wellenfronten 8R und 8L werden auf das rechte und linke Betrachterfenster 11R und 11L gleichzeitig abgebildet. Auch hier wird in der nullten Beugungsordnung die dreidimensionale Szene rekonstruiert. Bewegt sich der Betrachter in der Betrachterebene 12, so detektiert das Positionserfassungssystem 17 die Änderung der Positionen der Augen des Betrachters und steuert das Ablenkmittel 18 derart, dass die Betrachterfenster 11R und 11L in Richtung der neuen Position der Augen des Betrachters nachgeführt werden. Eine farbige Rekonstruktion der dreidimensionalen Szene kann entsprechend dem oben beschriebenen Beispiel mittels des Strahlteilerelementes 22 erfolgen.

Anstatt zwei Lichtmodulationseinrichtungen 2 zu verwenden, kann auch hier nur eine einzige Lichtmodulationseinrichtung 2 zur Rekonstruktion der Szene für einen oder mehrere Betrachter vorgesehen sein. Dementsprechend ist dann auch nur eine einzige Lichtquelle zur Beleuchtung der Lichtmodulationseinrichtung 2 notwendig.

Befinden sich mehrere Betrachter in der Betrachterebene 12, so werden gemäß Figur 5 die rechte und die linke Wellenfront gleichzeitig erst einem Betrachter und dann dem nächsten Betrachter mittels des Ablenkelements 18 dargestellt. Danach wird die nächste Wellenfront wieder erst dem einen Betrachter und dann dem nächsten Betrachter usw. dargestellt. Es ist aber ebenso auch möglich, wie bereits oben erwähnt, die entsprechende Wellenfront für das rechte Betrachterfenster 11R nacheinander allen Betrachtern und danach die entsprechende Wellenfront für das linke Betrachterfenster 11L nacheinander allen Betrachtern darzustellen. Zur Darstellung der nächsten rekonstruierten Szene wird entsprechend vorgegangen.

Auch in diesem Ausführungsbeispiel ist es möglich, eine einzige Lichtmodulationseinrichtung 2 für beide Augen des Betrachters, wie in Figur 5 beschrieben, vorzusehen, wobei die Betrachterfenster 11R und 11L nacheinander bedient werden.

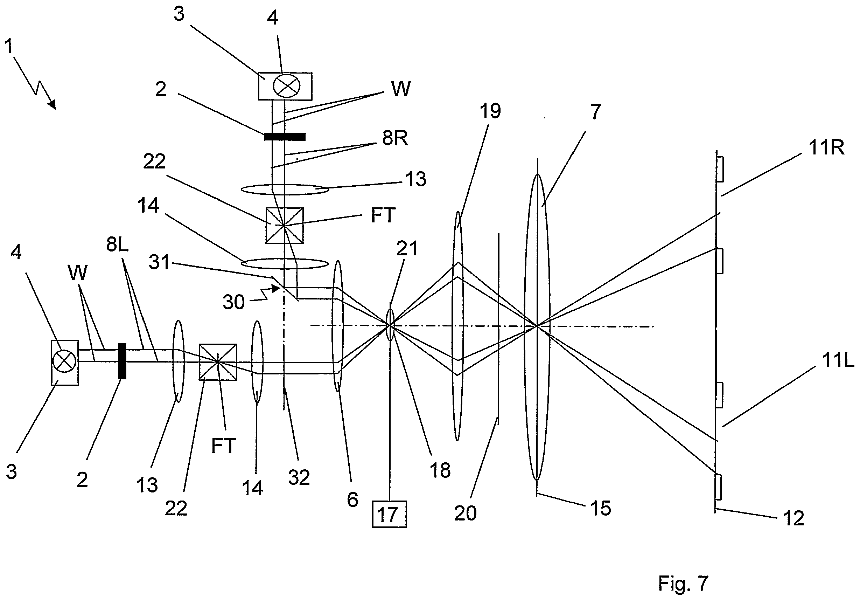

Ein weiteres Ausführungsbeispiel der Projektionsvorrichtung 1 zeigt Figur 7, wobei die Projektionsvorrichtung 1 nur für einen Betrachter dargestellt ist. Es ist jedoch selbstverständlich möglich, diese auch für mehrere Betrachter vorzusehen. Die dargestellten Lichtmodulationseinrichtungen 2 können eindimensionale, zweidimensionale oder zweidimensionale binäre Lichtmodulationseinrichtungen sein. Sollten die Lichtmodulationseinrichtungen 2 eindimensional ausgeführt werden, so sind zwei Ablenkelemente 9, wie in den Figuren 1 und 3 dargestellt, vorzusehen. Bei Einsatz von zweidimensionalen binären Lichtmodulationseinrichtungen ist es von großem Vorteil, wenn die Lichtmodulationseinrichtungen 2 derart schnell sind, dass mehrere Betrachter die rekonstruierte Szene beobachten können. Ist dies nicht der Fall kann jedoch nur ein Betrachter die rekonstruierte Szene beobachten. In diesem Ausführungsbeispiel ist, wie in den Figuren 5 und 6 dargestellt, zur Nachführung der Betrachterfenster 11R und 11L oder auch mehrerer Betrachterfenster nur ein einziges Ablenkmittel 18 vorgesehen. Die Abbildungselemente dieser Projektionsvorrichtung 1 weisen verglichen mit der Projektionsvorrichtung 1 gemäß der Figuren 5 und 6 eine kleinere numerische Apertur (NA) auf, wodurch weniger Aberrationen auftreten. Da die Linsenelemente 13, 14 und das Strahlteilerelement 22 doppelt, nämlich für jede Lichtmodulationseinrichtung 2 bzw. für jedes Auge des Betrachters, vorhanden sind, und dadurch die Abbildung der Wellenfronten W im ersten Teil der Projektionsvorrichtung 1 unabhängig voneinander geschieht, können beispielsweise Justagefehler einzeln für jedes Auge korrigiert werden.

Die dreidimensionale Szene wird mit Hilfe von je einer Lichtmodulationseinrichtung 2 für das rechte Auge und für das linke Auge rekonstruiert. Diese beiden Lichtmodulationseinrichtungen 2 werden von den zwei Lichtquellen 4 der Beleuchtungseinrichtungen 3 mit hinreichend kohärentem Licht beleuchtet. Auf die Lichtmodulationseinrichtungen 2 treffen die Wellenfronten W, welche derart moduliert werden, dass die gewünschten Wellenfronten 8R und 8L entstehen. Die Wellenfronten 8R und 8L sind in diesem Ausführungsbeispiel nur jeweils durch zwei Strahlen, also als halbe Wellenfronten, dargestellt. Die Wellenfront 8R wird danach über die Linsenelemente 13 und 14 auf eine bildseitige Brennebene 30 des Linsenelements 14 abgebildet. In der Brennebene 30 ist ein Umlenkelement 31, welches als Umlenkspiegel ausgeführt und nicht bewegbar ist, angeordnet. Das Umlenkelement 31 reflektiert die Wellenfront 8R in die gewünschte Richtung. Die Wellenfront 8L wird ebenso wie die Wellenfront 8R über die Linseelemente 13 und 14 abgebildet, allerdings hier in eine Brennebene 32. Gleichzeitig entstehen jeweils zwischen den Linsenelementen 13 und 14 in der bildseitigen Brennebene des Linsenelementes 13 die Fourier-Transformierten FT der Wellenfronten 8R und 8L. Die beiden Fourier-Transformierten FT werden danach über die Linsenelemente 14 und das Abbildungsmittel 6 in die Brennebene 21 abgebildet. Die Wellenfronten 8R und 8L werden danach mittels der Abbildungsmittel 6 und 19 in die Brennebene 20 abgebildet, wobei diese danach über den Bildschirm 7 in die Betrachterfenster 11R und 11L auf die Augen des Betrachters abgebildet werden. Gleichzeitig werden die Bilder der Fourier-Transformierten FT von der Brennebene 21 über das zweite Abbildungsmittel 19 auf dem Bildschirm 7 abgebildet. Die Wellenfronten 8R und 8L für das rechte und das linke Betrachterfenster 11R und 11L werden gleichzeitig abgebildet. Die dreidimensionale Szene wird in der nullten Beugungsordnung rekonstruiert. Zur Nachführung der Betrachterfenster 11R und 11L in der Betrachterebene 12 detektiert das Positionserfassungssystem 17 die Änderung der Positionen der Augen bei Bewegung des Betrachters. Das Positionserfassungssystem übernimmt auch die Aufgabe der Steuerung des Ablenkmittels 18 und steuert dieses derart, dass die Betrachterfenster 11R und 11L in Richtung der neuen Position der Augen des Betrachters nachgeführt werden.

Zur Darstellung der rekonstruierten Szene bzw. Szenen für mehrere Betrachter in der Betrachterebene 12, wird die rechte und die linke Wellenfront gleichzeitig erst einem Betrachter und dann dem nächsten Betrachter dargestellt. Danach wird die nächste Wellenfront wieder erst dem einen Betrachter und dann dem nächsten Betrachter usw. dargestellt.

Eine farbige Rekonstruktion der dreidimensionalen Szene kann entsprechend den oben beschriebenen Beispielen mittels zwei Strahlteilerelemente 22 erfolgen, welche jeweils zwischen den Linsenelementen 13 und 14 angeordnet sein können.

Selbstverständlich können sie auch an anderer Position in der Projektionsvorrichtung 1 angeordnet sein. Die Projektionsvorrichtung 1 gemäß Figur 7 kann auch derart ausgeführt sein, dass ungefaltete Strahlengänge vorliegen.

Die Beleuchtungseinrichtungen 3 mit den Lichtquellen 4 können auch an beliebiger Position in der Projektionsvorrichtung 1 angeordnet werden. Wenn beispielsweise die Lichtmodulationseinrichtung 2 nicht transmissiv sondern reflektiv ausgeführt ist, dann kann die Beleuchtungseinrichtung 3 jeweils derart angeordnet sein, dass die jeweilige ausgesandte Wellenfront W über ein Ablenkelement, z.B. ein Umlenkspiegel oder ein halbdurchlässiger Spiegel, zu der entsprechenden Lichtmodulationseinrichtung 2 geführt wird. Es ist vorteilhaft, wenn die Lichtquelle 4 auf eine Fourierebene abgebildet wird, wobei das Ablenkelement in der Fourierebene angeordnet ist. Dabei kann zwischen dem Ablenkelement und der Lichtmodulationseinrichtung 2 wenigstens ein optisches Element, wie Linse, Spiegel oder ähnliches, vorgesehen sein. Ein derartiges Ablenkelement kann beispielsweise bezogen auf Figur 7 im Bereich des Ablenkmittels 18 oder am Ort des Strahlteilerelements 22 angeordnet sein, wobei das Strahlteilerelement 22 dann vor oder hinter dem Ablenkelement oder auch an anderer Position in der Projektionsvorrichtung 1 vorgesehen sein kann. Auf diese Weise kann die Projektionsvorrichtung 1 kompakter im Aufbau gestaltet werden.

Die Lichtquellen 4 aller Ausführungsbeispiele können auch durch eine hier nicht dargestellte primäre Lichtquelle mit Hilfe von wenigstens einem optischen Element erzeugt werden.

Für alle Ausführungsbeispiele ist es ebenso auch möglich, die rekonstruierte Szene anstatt in der nullten Beugungsordnung auch in einer anderen Beugungsordnung, z.B. in der 1. oder -1. Beugungsordnung, darzustellen.

Mögliche Einsatzgebiete der holographischen Projektionsvorrichtung 1 können Displays für eine zwei- und/oder dreidimensionale Darstellung für den Privat- und Arbeitsbereich sein, wie beispielsweise für Computer, Fernsehen, elektronische Spiele, Automobilindustrie zur Anzeige von Informationen oder der Unterhaltung, Medizintechnik, hier insbesondere für die minimal-invasive Chirurgie oder die räumliche Darstellung tomographisch gewonnener Daten oder auch für die Militärtechnik beispielsweise zur Darstellung von Geländeprofilen. Selbstverständlich kann die vorliegende Projektionsvorrichtung 1 auch in anderen, hier nicht genannten Bereichen eingesetzt werden.

## Patentansprüche

1. Projektionsvorrichtung zur holographischen Rekonstruktion einer Szene mit wenigstens einer Lichtquelle für hinreichend kohärentes Licht und wenigstens einer Lichtmodulationseinrichtung zum Erzeugen einer kodierten Wellenfront der Szene, **gekennzeichnet durch** Abbildungsmittel (6) zum Abbilden einer Fourier-Transformierten (FT) des durch die Lichtmodulationseinrichtung (2, 2R, 2G, 2B) modulierten Lichts auf ein als Bildschirm dienendes optisches Element (7) und zum Abbilden der kodierten Wellenfront (8, 8R, 8G, 8B, 8L) in wenigstens ein virtuelles Betrachterfenster (11, 11R, 11L, 24R, 24L, 28R, 28L) einer Betrachterebene (12) und wenigstens ein Ablenkmittel (18) zwischen der Lichtmodulationseinrichtung (2, 2R, 2G, 2B) und dem als Bildschirm dienenden optischen Element (7) zur Nachführung des Betrachterfensters (11, 11R, 11L, 24R, 24L, 28R, 28L) entsprechend einer Änderung einer Augenposition wenigstens eines Betrachters.

2. Projektionsvorrichtung nach Anspruch 1, bei der der Abbildungsmaßstab und die Größe des als Bildschirm dienenden optischen Elements (7) so gewählt sind, dass eine periodische Fortsetzung der Beugungsordnungen der Fourier-Transformierten (FT) außerhalb des Bildschirms (7) liegt.

3. Projektionsvorrichtung nach Anspruch 1, bei der die Lichtmodulationseinrichtung (2, 2R, 2G, 2B) eindimensional ist.

4. Projektionsvorrichtung nach Anspruch 1, **gekennzeichnet durch** eine binäre zweidimensionale Lichtmodulationseinrichtung (2, 2R, 2G, 2B).

5. Projektionsvorrichtung nach Anspruch 3, bei der ein Ablenkelement (9) zur Erzeugung einer Wellenfront (10) für eine rekonstruierte Szene enthalten ist, welches eine optische Ablenkung in Richtung senkrecht zu der eindimensionalen Lichtmodulationseinrichtung (2, 2R, 2G, 2B) realisiert.

6. Projektionsvorrichtung nach Anspruch 1, bei der ein Positionserfassungssystem (17) zur Bestimmung einer Augenposition des Betrachters enthalten ist und/oder bei der die Projektionsvorrichtung für mehrere Betrachter vorgesehen ist und bei der zur Nachführung von Betrachterfenstern (11, 11R, 11L, 24R, 24L, 28R, 28L) in Strahlrichtung hintereinander pro Betrachter ein Ablenkmittel (18), für alle Ablenkmittel (18) ein zur Kollimation dienendes gemeinsames Lentikular (19) und ein gemeinsames Fokussierelement (25) angeordnet sind.

7. Projektionsvorrichtung nach einem der Ansprüche 1, 3 oder 4, bei der wenigstens ein Strahlteilerelement (22, 27) zwischen dem Ablenkmittel (18) und der Lichtmodulationseinrichtung (2, 2R, 2G, 2B) angeordnet ist und bei der vorzugsweise für eine farbige Rekonstruktion einer Szene das Strahlteilerelement (22) zur Aufteilung des Lichts in seine Spektralkomponenten oder Zusammenführung enthalten ist.

8. Projektionsvorrichtung nach Anspruch 7, bei der bei Verwendung einer zweidimensionalen binären Lichtmodulationseinrichtung (2, 2R, 2G, 2B) das Strahlteilerelement (22) für eine farbige Rekonstruktion einer Szene und ein weiteres Strahlteilerelement (27) zur Vervielfältigung einer aus der Lichtmodulationseinrichtung (2, 2R, 2G, 2B) austretenden Wellenfront (8R, 8L, 8G, 8B) enthalten ist.

9. Projektionsvorrichtung nach Anspruch 1, bei der das Ablenkmittel (18) ein Spiegel ist und/oder bei der das als Bildschirm dienende optische Element ein Spiegel, insbesondere ein Konkavspiegel, ist.

10. Projektionsvorrichtung nach Anspruch 1, bei der im Strahlengang Linsenelemente (13, 14) zur Reduzierung von Abbildungsfehlern enthalten sind und/oder bei der die Lichtmodulationseinrichtung (2, 2R, 2G, 2B) ein Phasenmodulator ist.

11. Verfahren zur holographischen Rekonstruktion von Szenen, vorzugsweise zum Betreiben einer Projektionsvorrichtung nach einem der Ansprüche 1 bis 10, bei dem eine Beleuchtungseinrichtung mit wenigstens einer hinreichend kohärenten Lichtquelle wenigstens eine Lichtmodulationseinrichtung mit einer kodierten Wellenfront beleuchtet, **dadurch gekennzeichnet, dass** eine Fourier-Transformierte (FT) des durch die Lichtmodulationseinrichtung (2, 2R, 2G, 2B) modulierten Lichts der Lichtquelle (4) auf ein als Bildschirm dienendes optisches Element (7) abgebildet wird, wobei wenigstens das optische Element (7) die kodierte Wellenfront (8, 8R, 8G, 8B, 8L) in wenigstens ein virtuelles Betrachterfenster (11, 11R, 11L, 24R, 24L, 28R, 28L) einer Betrachterebene (12) abbildet, und wobei wenigstens ein zwischen der Lichtmodulationseinrichtung (2, 2R, 2G, 2B) und dem als Bildschirm dienenden optischen Element (7) angeordnetes Ablenkmittel (18) das Betrachterfenster (11, 11R, 11L, 24R, 24L, 28R, 28L) nach Änderung einer Augenposition wenigstens eines Betrachters nachführt.

12. Verfahren nach Anspruch 11, bei dem die Lichtmodulationseinrichtung (2, 2R, 2G, 2B) und das optische Element (7) einen Abbildungsmaßstab definieren, der mit der Größe des optischen Elements (7) derart gewählt wird, dass eine periodische Fortsetzung der Beugungsordnungen der Fourier-Transformierten (FT) außerhalb des optischen Elements (7) erfolgt.

13. Verfahren nach Anspruch 11, bei dem die rekonstruierte Szene in der nullten Beugungsordnung rekonstruiert wird und/oder bei dem wenigstens ein Abbildungsmittel (6, 19, 25) die Fourier-Transformierte (FT) der Wellenfront (W, 8, 8R, 8G, 8B, 8L) auf dem optischen Element (7) abbildet.

14. Verfahren nach Anspruch 11, bei dem ein Positionserfassungssystem (17) eine Augenposition des Betrachters beim Beobachten der rekonstruierten Szene erfasst und verfolgt und/oder bei dem für zwei oder mehrere Betrachter dieselbe Lichtmodulationseinrichtung (2, 2R, 2G, 2B) zur Darstellung der Wellenfront (W, 8, 8R, 8G, 8B, 8L) für jeweils alle linken oder alle rechten Augen der Betrachter benutzt wird, wobei mehrere Lichtquellen (4) Licht mit verschiedenen Einfallswinkeln auf die Lichtmodulationseinrichtung (2, 2R, 2G, 2B) senden.

15. Verfahren nach Anspruch 11, bei dem von einer eindimensionalen Lichtmodulationseinrichtung (2, 2R, 2G, 2B) mit einer eindimensional modulierten Wellenfront (8, 8R, 8G, 8B, 8L) eine Wellenfront (10) mittels eines Ablenkelements (9) erzeugt wird.

16. Verfahren nach Anspruch 11, bei dem eine farbige Rekonstruktion der Szene simultan in den drei Grundfarben erfolgt und/oder wobei eine zweidimensionale binäre Lichtmodulationseinrichtung (2, 2R, 2G, 2B) vorgesehen ist, bei dem ein erstes Strahlteilerelement (27) eine aus der Lichtmodulationseinrichtung (2, 2R, 2G, 2B) austretende Wellenfront (8, 8R, 8G, 8B, 8L) vervielfältigt und wenigstens ein weiteres Strahlteilerelement (22) die Szene simultan in den drei Grundfarben rekonstruiert.

17. Verfahren nach Anspruch 16, bei dem die simultane farbige Rekonstruktion der Szene über drei Lichtmodulationseinrichtungen (2R, 2G, 2B) erfolgt, wobei das zweite Strahlteilerelement (22) die einzelnen monochromatischen Wellenfronten (8R, 8G, 8B) des Lichts ausgehend von den Lichtmodulationseinrichtungen (2R, 2G, 2B) zusammenführt.

## Claims

1. Projection apparatus for the holographic reconstruction of a scene, having at least one light source for sufficiently coherent light and at least one light modulation device for generating an encoded wavefront of the scene, **characterized by** imaging means (6) for imaging a Fourier transform (FT) of the light modulated by the light modulation device (2, 2R, 2G, 2B) onto an optical element (7) serving as a screen, and for imaging the encoded wavefront (8, 8R, 8G, 8B, 8L) into at least one virtual observer window (11, 11R, 11L, 24R, 24L, 28R, 28L) of an observer plane (12), and at least one deflection means (18) between the light modulation device (2, 2R, 2G, 2B) and the optical element (7) serving as a screen for tracking the observer window (11, 11R, 11L, 24R, 24L, 28R, 28L) in accordance with a change in an eye position of at least one observer.

2. Projection apparatus according to Claim 1, in which the imaging scale and the size of the optical element (7) serving as a screen are selected such that a periodic continuation of the diffraction orders of the Fourier transform (FT) lies outside the screen (7).

3. Projection apparatus according to Claim 1, in which the light modulation device (2, 2R, 2G, 2B) is one-dimensional.

4. Projection apparatus according to Claim 1, **characterized by** a binary two-dimensional light modulation device (2, 2R, 2G, 2B).

5. Projection apparatus according to Claim 3, comprising a deflection element (9) for generating a wavefront (10) for a reconstructed scene, which realizes optical deflection in a direction perpendicular to the one-dimensional light modulation device (2, 2R, 2G, 2B).

6. Projection apparatus according to Claim 1, comprising a position detection system (17) for determining an eye position of the observer and/or in which the projection apparatus is provided for a plurality of observers, and in which for tracking observer windows (11, 11R, 11L, 24R, 24L, 28R, 28L) one deflection means (18) per observer, one collimating lenticular array (19) shared between all deflection means (18) and a shared focusing element (25) are disposed one after another, seen in the direction of light propagation.

7. Projection apparatus according to one of Claims 1, 3 or 4, in which at least one beam splitter element (22, 27) is arranged between the deflection means (18) and the light modulation device (2, 2R, 2G, 2B), and in which preferably for a colour reconstruction of a scene, the beam splitter element (22) is used to split the light into its spectral components or to recompose the light from these components.

8. Projection apparatus according to Claim 7, in which, if a two-dimensional binary light modulation device (2, 2R, 2G, 2B) is used, the apparatus comprises the beam splitter element (22) for a colour reconstruction of a scene and a further beam splitter element (27) for multiplication of a wavefront (8R, 8L, 8G, 8B) emanating from the light modulation device (2, 2R, 2G, 2B).

9. Projection apparatus according to Claim 1, in which the deflection means (18) is a mirror, and/or in which the optical element serving as a screen is a mirror, in particular a concave mirror.

10. Projection apparatus according to Claim 1, comprising lens elements (13, 14) for reducing aberrations in the beam path, and/or in which the light modulation device (2, 2R, 2G, 2B) is a phase modulator.

11. Method for the holographic reconstruction of scenes, preferably for operating a projection apparatus according to one of Claims 1 to 10, in which an illumination device having at least one sufficiently coherent light source illuminates at least one light modulation device with an encoded wavefront, **characterized in that** a Fourier transform (FT) of the light emitted by the light source (4) and modulated by the light modulation device (2, 2R, 2G, 2B) is imaged onto an optical element (7) serving as a screen, where at least the optical element (7) images the encoded wavefront (8, 8R, 8G, 8B, 8L) into at least one virtual observer window (11, 11R, 11L, 24R, 24L, 28R, 28L) of an observer plane (12), and where at least one deflection means (18), arranged between the light modulation device (2, 2R, 2G, 2B) and the optical element (7) serving as a screen tracks the observer window (11, 11R, 11L, 24R, 24L, 28R, 28L) after a change in an eye position of at least one observer.

12. Method according to Claim 11, in which the light modulation device (2, 2R, 2G, 2B) and the optical element (7) define an imaging scale which is selected together with the size of the optical element (7) such that a periodic continuation of the diffraction orders of the Fourier transform (FT) takes place outside the optical element (7).

13. Method according to Claim 11, in which the reconstructed scene is reconstructed in the zeroth diffraction order, and/or in which at least one imaging means (6, 19, 25) images the Fourier transform (FT) of the wavefront (W, 8, 8R, 8G, 8B, 8L) onto the optical element (7).

14. Method according to Claim 11, in which a position detection system (17) detects and follows an eye position of the observer during observation of the reconstructed scene, and/or in which for two or more observers only one light modulation device (2, 2R, 2G, 2B) is used to generate the wavefront (W, 8, 8R, 8G, 8B, 8L) for all left eyes or all right eyes of the observers, where a plurality of light sources (4) emit light with different angles of incidence onto the light modulation device (2, 2R, 2G, 2B).

15. Method according to Claim 11, in which a wavefront (10) is generated using a deflection element (9) by a one-dimensional light modulation device (2, 2R, 2G, 2B) generating a one-dimensionally modulated wavefront (8, 8R, 8G, 8B, 8L).

16. Method according to Claim 11, in which a colour reconstruction of the scene is carried out simultaneously for the three primary colours, and/or where a two-dimensional binary light modulation device (2, 2R, 2G, 2B) is provided, in which a first beam splitter element (27) multiplies a wavefront (8, 8R, 8G, 8B, 8L) emanating from the light modulation device (2, 2R, 2G, 2B) and at least one further beam splitter element (22) reconstructs the scene simultaneously in the three primary colours.

17. Method according to Claim 16, in which the simultaneous colour reconstruction of the scene is carried out by three light modulation devices (2R, 2G, 2B), where the second beam splitter element (22) combines the individual monochromatic wavefronts (8R, 8G, 8B) of the light emanating from the light modulation devices (2R, 2G, 2B).

## Revendications

1. Dispositif de projection destiné à la reconstruction d'une scène comportant au moins une source lumineuse destinée à une lumière suffisamment cohérente et au moins un dispositif de modulation de lumière destiné à générer un front d'onde codé de la scène, **caractérisé par** un moyen de formation d'image (6) destiné à former l'image d'une transformée de Fourier (FT) de la lumière modulée par le dispositif de modulation de lumière (2, 2R, 2G, 2B) sur un élément optique servant d'écran (7) et destiné à former l'image du front d'onde codé (8, 8R, 8G, 8B, 8L) dans au moins une fenêtre d'observation virtuelle (11, 11R, 11L, 24R, 24L, 28R, 28L) d'un plan d'observation (12) et au moins un moyen de déviation (18) entre le dispositif de modulation de lumière (2, 2R, 2G, 2B) et l'élément optique servant d'écran (7) afin de poursuivre la fenêtre d'observation (11, 11R, 11L, 24R, 24L, 28R, 28L) d'une manière qui correspond à une variation d'une position des yeux d'au moins un observateur.

2. Dispositif de projection selon la revendication 1, dans lequel l'échelle de formation d'image et la taille de l'élément optique servant d'écran (7) sont sélectionnées de manière à ce qu'un prolongement périodique des ordres de diffraction de la transformée de Fourier (FT) se situe à l'extérieur de l'écran (7).

3. Dispositif de projection selon la revendication 1, dans lequel le dispositif de modulation de lumière (2, 2R, 2G, 2B) est monodimensionnel.

4. Dispositif de projection selon la revendication 1, **caractérisé par** un dispositif de modulation de lumière bidimensionnel binaire (2, 2R, 2G, 2B).

5. dispositif de projection selon la revendication 3, dans lequel il est prévu un élément de déviation (9) pour générer un front d'onde (10) destiné à une scène reconstruite qui réalise une déviation optique dans une direction perpendiculaire au dispositif de modulation de lumière monodimensionnel (2, 2R, 2G, 2B).

6. Dispositif de projection selon la revendication 1, dans lequel il est prévu un système de détection de position (17) destiné à déterminer une position des yeux de l'observateur et/ou dans lequel le dispositif de projection est prévu pour plusieurs observateurs et dans lequel, pour la poursuite des fenêtres d'observation (11, 11R, 11L, 24R, 24L, 28R, 28L), des moyens de déviation (18) sont disposés consécutivement dans la direction du faisceau pour chaque observateur, et un système lenticulaire (19) et un élément de focalisation commun (25) utilisé à des fins de collimation sont prévus pour tous les moyens de déviation (18).

7. Dispositif de projection selon l'une quelconque des revendications 1, 3 ou 4, dans lequel au moins un élément diviseur de faisceau (22, 27) est disposé entre le moyen de déviation (18) et le dispositif de modulation de lumière (2, 2R, 2G, 2B) et dans lequel l'élément diviseur de faisceau (22) destiné à diviser la lumière en ses composantes spectrales ou à les recombiner est de préférence prévu pour la reconstruction en couleur d'une scène.

8. Dispositif de projection selon la revendication 7, dans lequel, lors de l'utilisation d'un dispositif de modulation de lumière bidimensionnel binaire (2, 2R, 2G, 2B), on utilise l'élément diviseur de faisceau (22) pour la reconstruction en couleur d'une scène et un autre élément diviseur de faisceau (27) pour la duplication d'un front d'onde (8R, 8L, 8G, 8B) émanant du dispositif de modulation de lumière (2, 2R, 2G, 2B).

9. Dispositif de projection selon la revendication 1, dans lequel le moyen de déviation (18) est un miroir est et/ou dans lequel l'élément optique utilisé en tant qu'écran est un miroir, notamment un miroir concave.

10. Dispositif de projection selon la revendication 1, dans lequel des éléments de lentille (13, 14) sont prévus sur le chemin de faisceau afin de réduire les erreurs de formation d'image et/ou dans lequel le dispositif de modulation de lumière (2, 2R, 2G, 2B) est un modulateur de phase.

11. Procédé de reconstruction holographique de scènes, de préférence pour mettre en fonctionnement un dispositif de projection selon l'une quelconque des revendications 1 à 10, dans lequel un dispositif d'éclairage comportant au moins une source lumineuse suffisamment cohérente éclaire au moins un dispositif de modulation de lumière avec un front d'onde codé, **caractérisé en ce qu'**une transformée de Fourier (FT) de la lumière de la source lumineuse (4) modulée par le dispositif de modulation de lumière (2, 2R, 2G, 2B) est mise sous forme d'image sur un élément optique servant d'écran (7), dans lequel au moins l'élément optique (7) forme l'image du front d'onde codé (8, 8R, 8G, 8B, 8L) dans au moins une fenêtre d'observation virtuelle (11, 11R, 11L, 24R, 24L, 28R, 28L) d'un plan d'observation (12), et dans lequel au moins un moyen de déviation (18) disposé entre le dispositif de modulation de lumière (2, 2R, 2G, 2B) et l'élément optique servant d'écran (7) poursuit la fenêtre d'observation (11, 11R, 11L, 24R, 24L, 28R, 28L) suivant la modification d'une position des yeux d'au moins un observateur.

12. Procédé selon la revendication 11, dans lequel le dispositif de modulation de lumière (2, 2R, 2G, 2B) et l'élément optique (7) définissent une échelle de formation d'image qui est sélectionnée avec la taille de l'élément optique (7) de manière à ce qu'un prolongement périodique des ordres de diffraction de la transformée de Fourier (FT) s'effectue à l'extérieur de l'élément optique (7).

13. Procédé selon la revendication 11, dans lequel la scène reconstruite est reconstruite à l'ordre de diffraction zéro et/ou dans lequel au moins un moyen de formation d'image (6, 19, 25) forme l'image de la transformée de Fourier (FT) du front d'onde (W, 8, 8R, 8G, 8B, 8L) sur l'élément optique (7).

14. Procédé selon la revendication 11, dans lequel un système de détection de position (17) détecte et poursuit une position des yeux de l'observateur lors de l'observation de la scène reconstruite et/ou dans lequel, pour deux observateurs ou plus, un même dispositif de modulation de lumière (2, 2R, 2G, 2B) est utilisé pour représenter le front d'onde (W, 8, 8R, 8G, 8B, 8L) respectivement destiné à tous les yeux gauches ou droits des observateurs, dans lequel plusieurs sources lumineuses (4) émettent des lumières ayant des angles d'incidence différents sur le dispositif de modulation de lumière (2, 2R, 2G, 2B).

15. Procédé selon la revendication 11, dans lequel un front d'onde (10) est généré au moyen d'un élément de déviation (9) par un dispositif de modulation de lumière monodimensionnel (2, 2R, 2G, 2B) avec un front d'onde modulé de manière monodimensionnelle (8, 8R, 8G, 8B, 8L).

16. Procédé selon la revendication 11, dans lequel une reconstruction en couleur de la scène est effectuée simultanément dans les trois couleurs fondamentales et/ou dans lequel il est prévu un dispositif de modulation de lumière bidimensionnel binaire (2, 2R, 2G, 2B), dans lequel un premier élément diviseur de faisceau (27) duplique un front d'onde (8, 8R, 8G, 8B, 8L) émanant du dispositif de modulation de lumière (2, 2R, 2G, 2B) et au moins un autre élément diviseur de faisceau (22) reconstruit simultanément la scène dans les trois couleurs fondamentales.

17. Procédé selon la revendication 16, dans lequel la reconstruction simultanée en couleur de la scène s'effectue par l'intermédiaire de trois dispositifs de modulation de lumière (2R, 2G, 2B), dans lequel le deuxième élément diviseur de faisceau (22) recombine les fronts d'onde monochromatiques individuels (8R, 8G, 8B) de la lumière provenant des dispositifs de modulation de lumière (2R, 2G, 2B).
